# EUROPEAN PATENT SPECIFICATION

(11) **EP 3 663 360 B1**
(45) Date of publication and mention of the grant of the patent: **04.12.2024**
(21) Application number: 18842244.8
(22) Date of filing: 24.07.2018
(51) Int. Cl.: C08L 77/00, C08K 3/26, C08K 5/18, C08K 5/20, C08K 13/02, C08L 71/12, C08L 77/06, C08K 3/22, C08K 5/105, C08K 5/524

(54) **RESIN COMPOSITION AND MOLDED ARTICLE**
HARZZUSAMMENSETZUNG UND FORMARTIKEL
COMPOSITION DE RÉSINE ET ARTICLE MOULÉ

(30) Priority: 03.08.2017 JP 2017150443
(43) Date of publication of application: 10.06.2020
(73) Proprietor: GLOBAL POLYACETAL CO., LTD., Tokyo 105-0021 (JP)
(72) Inventor: YANAGISAWA Kenichi, Hiratsuka-shi Kanagawa 254-0016 (JP)
(74) Representative: Zimmermann & Partner Patentanwälte mbB
(86) International application number: PCT/JP2018/027686
(87) International publication number: WO 2019/026688

(56) References cited:
- WO-A1-01/94471
- CN-A- 103 194 014
- CN-A- 105 694 447
- CN-A- 106 987 120
- CN-A- 106 987 121
- JP-A- H0 726 136
- JP-A- S6 015 453
- US-A1- 2017 166 746

## Description

### TECHNICAL FIELD

This invention relates to a resin composition and a molded article.

### BACKGROUND ART

Polyphenylene ether resin is a sort of engineering plastics known for its excellent transparency, mechanical characteristics, heat resistance, dimensional stability, non-hygroscopicity and electrical characteristics, but is unfortunately poor in impact resistance. Hence, the polyphenylene ether is often used after being mixed with other polymer, in order to make full use of its advantages and to compensate the disadvantage. Such other polymer is exemplified by styrene-based resin.

A composition composed of polyphenylene ether resin and styrene resin is, however, not fully resistant to heat when used in a high temperature environment, and in strong need of improvement.

Regarding such situation, Patent Literature 1 discloses a resin composition which includes (A) 20 to 80 parts by mass of a polyphenylene ether resin; (B) 80 to 20 parts by mass of a polyamide; (C) 0.1 to 10 parts by mass of a compatibilizer; (D) 0.05 to 3 parts by mass of N,N'-hexamethylenebis(3,5-di-t-butyl-4-hydroxy-hydrocinnamamide); and (E) 0.05 to 3 parts by mass of tetrakis(2,4-ditertiarybutylphenyl)-4,4'-biphenylene diphosphonite.

Patent Literature 2 describes a PA (polyamide) resin composition used for NMT (nano molding technology), and having an LDS (laser direct structuring) function. The PA resin composition used for the NMT is mainly prepared from raw materials in parts by mass as follows: 30 to 90 parts of PA resin, 10 to 40 parts of glass fibers, 3 to 25 parts of inorganic whiskers, 3 to 10 parts of an LDS auxiliary, 0.3 to 5 parts of a stabilizer, 3 to 15 parts of a toughening agent, and 0.5 to 3 parts of a lubricant, wherein PA resin is PA66 resin and/or PA6 resin.

### CITATION LIST

### PATENT LITERATURE

[Patent Literature 1] JP-A-H07-026136
[Patent Literature 2] CN 105 694 447 A

### SUMMARY OF THE INVENTION

### TECHNICAL PROBLEM

In recent years, the resin composition that contains polyphenylene ether resin and polyamide resin has become required to stay more durable against heat when used in a high temperature atmosphere over a long period, particularly to retain proper levels of performances including impact strength and nominal tensile strain. In some cases, the resin composition may be further required to be less likely to cause change in color tone even if used under such harsh conditions.

It is therefore an object of this invention to solve the aforementioned problems, and to provide a resin composition capable of providing a molded article that excels in heat resistance over a long period, and particularly in retentions of impact strength and nominal tensile strain, and such molded article. It is a further object of this invention to provide a resin composition not only capable of satisfying these performances, but also being less likely to cause change in color tone even if kept at high temperatures over a long period.

### SOLUTION TO PROBLEM

The present inventors conducted research to address the above-mentioned problems, and as a result, discovered that the above problems could be solved by blending phenolic antioxidant that has specific structures, phosphorus-containing antioxidants and amine-based antioxidant with resin ingredient that contains the polyphenylene ether resin and the polyamide resin in the specified ratio. Specifically, the problems described above are solved by the invention as defined in the appended claims.

### ADVANTAGEOUS EFFECTS OF INVENTION

This invention made it possible to provide a resin composition capable of providing a molded article that excels in heat resistance over a long period, and particularly in retentions of impact strength and nominal tensile strain, and such molded article. It was also made possible to provide a resin composition not only capable of satisfying these performances, but also being less likely to cause change in color tone even if kept at high temperatures over a long period.

### DESCRIPTION OF EMBODIMENTS

This invention will be detailed below. Note that all numerical ranges given in this specification, using "to" preceded and succeeded by numerals, are understood to represent the ranges including these numerals respectively as the lower and upper limit values.

The resin composition of this invention contains, per 100 parts by mass of a resin ingredient composed of 10 to 60 parts by mass of a polyphenylene ether resin and 90 to 40 parts by mass of a polyamide resin;
0.01 to 1.0 parts by mass of a compatibilizer;
0.01 to 1.0 parts by mass of a phenolic antioxidant represented by formula (1);
0.01 to 1.0 parts by mass of a phosphorus-containing antioxidant; and
0.01 to 1.0 parts by mass of an amine-based antioxidant,
having a mass ratio given by phenolic antioxidant represented by formula (1)/phosphorus-containing antioxidant/amine-based antioxidant of 1/0.1 to 2.0/0.1 to 2.0, 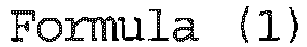 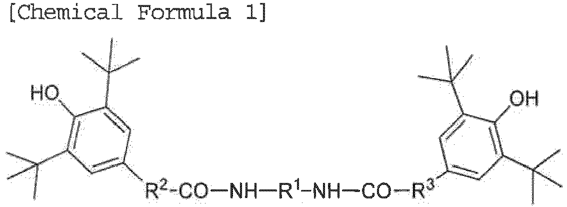
in formula (1), each of R¹, R² and R³ independently represents a divalent linking group wherein the resin composition contains 85 % by mass or more of the resin ingredient composed of the polyphenylene ether resin and the polyamide resin.

With this structure, obtainable is a resin composition capable of providing a molded article that excels in retentions of nominal tensile strain and Charpy impact strength even if used in a high temperature atmosphere over a long period. In particular, the resin composition is valuable since it can achieve these performances without being mixed with a copper-containing compound. More specifically, by virtue of capability of achieving these performances without being mixed with a copper-containing compound, the resin composition can now suppress change in color tone, even after heated at higher temperatures over a long period.

### <Polyphenylene Ether Resin>

The polyphenylene ether resin used for the resin composition of this invention is a polymer having in its principal chain a structural unit represented by the formula below, and may be either a homopolymer or copolymer. 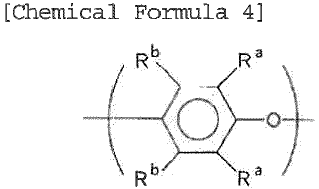 (in the formula, each of two (R^{a})s independently represents a hydrogen atom, halogen atom, primary or secondary alkyl group, aryl group, aminoalkyl group, haloalkyl group, hydrocarbonoxy group, or halohydrocarbonoxy group; and each of two (R^{b})s independently represents a hydrogen atom, halogen atom, primary or secondary alkyl group, aryl group, haloalkyl group, hydrocarbonoxy group, or halohydrocarbonoxy group, where both of two (R^{a})s will not represent hydrogen atoms at the same time.)

Each of R^{a} and R^{b} preferably represents a hydrogen atom, primary or secondary alkyl group, and aryl group. The primary alkyl group is preferably exemplified by methyl group, ethyl group, n-propyl group, n-butyl group, n-amyl group, ISO amyl group, 2-methylbutyl group, 2,3-dimethylbutyl group, 2-, 3- or 4-methylpentyl group, or heptyl group. The secondary alkyl group is preferably exemplified by ISO propyl group, sec-butyl group or 1-ethylpropyl group. In particular, R^{a} preferably represents a primary or secondary alkyl group having 1 to 4 carbon atoms, or a phenyl group. R^{b} is preferably a hydrogen atom.

Preferred homopolymer composing the polyphenylene ether resin is exemplified by polymers of 2,6-dialkylphenylene ether, such as poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether), and poly(2-methyl-6-propyl-1,4-phenylene ether). The copolymer is exemplified by 2,6-dialkylphenol/2,3,6-trialkylphenol copolymers such as 2,6-dimethylphenol/2,3,6-trimethylphenol copolymer, 2,6-dimethylphenol/2,3,6-triethylphenol copolymer, 2,6-diethylphenol/2,3,6-trimethylphenol copolymer, and 2,6-dipropylphenol/2,3,6-trimethylphenol copolymer; graft copolymer obtained by grafting styrene to poly(2,6-dimethyl-1,4-phenylene ether); and graft copolymer obtained by grafting styrene to 2,6-dimethylphenol/2,3,6-trimethylphenol copolymer.

As the polyphenylene ether resin in this invention, particularly preferable are poly(2,6-dimethyl-1,4-phenylene ether), and 2,6-dimethylphenol/2,3,6-trimethylphenol random copolymer. Alternatively, also a polyphenylene ether resin described in JP-A-2005-344065, with specified number of terminal groups and copper content, is suitably employed.

The polyphenylene ether resin preferably has a specific viscosity of 0.2 to 0.8 dl/g when measured in chloroform at 30°C, which is more preferably 0.3 to 0.6 dl/g. With the specific viscosity controlled to 0.2 dl/g or larger, the resin composition will tend to have improved mechanical strength, meanwhile when controlled to 0.8 dl/g or smaller, the resin composition will tend to have improved fluidity and to become more easy to process. It is also acceptable to combine two or more polyphenylene ether resins having different values of specific viscosity, to adjust the specific viscosity within the aforementioned ranges.

The polyphenylene ether resin used for this invention is manufacturable by any of known methods not specifically limited, typically by a method of allowing a monomer such as 2,6-dimethylphenol to oxidatively polymerize in the presence of an amine-copper catalyst, during which the specific viscosity is adjustable within a desired range by appropriately selecting reaction conditions. The specific viscosity is controllable on the basis of appropriate choice of conditions including polymerization temperature, polymerization time, and amount of consumption of catalyst.

The resin composition of this invention preferably contains 10% by mass or more of polyphenylene ether resin, wherein the content is more preferably 15% by mass or more, even may be 18% by mass or more, and yet may be 22% by mass or more. The upper limit is preferably 60% by mass or less for example, which may be 57% by mass or less, even may be 50% by mass or less, and yet may be 40% by mass or less.

In this invention, only one type of polyphenylene ether resin may be used independently, or two or more types may be used in a mixed manner. When two or more types are contained, the total content preferably falls within the aforementioned ranges.

### <Polyamide Resin>

The polyamide resin used in this invention is a polyamide polymer meltable under heating, and having in the molecule thereof an acid amide group (-CONH-).

The polyamide resin may be of any type without special limitation, for which any of known polyamide resins may be used. Specific examples include polyamide 4 (PA4), polyamide 6 (PA6), polyamide 11 (PA11), polyamide 12 (PA12), polyamide 46 (PA46), polyamide 66 (PA66), polyamide 6/66, polyamide 610 (PA610), polyamide 612 (PA612), polyhexamethylene terephthalamide (polyamide 6T), polyhexamethylene ISO phthalamide (polyamide 61), polymetaxylylene adipamide (polyamide MXD6), polymetaxylylene cebacamide (polyamide MXD10), *meta*/*para*-mixed xylylene diadipamide (polyamide MP6), meta/para-mixed xylylene dicebacamide (polyamide MP10), polyparaxylylene cebacamide (polyamide PXD10), polymetaxylylene dodecamide, polyamide 9T, and polyamide 9MT.

In this invention, these polyamide homopolymers or copolymers may be used independently, of in the form of mixture.

Among the aforementioned polyamide resins, aliphatic polyamide resin is preferable; polyamide 6, polyamide 66, and polyamide 6/66 are more preferable; polyamide 6 and polyamide 66 are even more preferable; and polyamide 66 is yet more preferable.

Now polyamide 6 in this context means polyamide resin composed of a structural unit derived from ε-caprolactam, but may contain a structural unit derived from other source monomer (for example with a content of 5 mol% or less, preferably 3 mol% or less, and further 1 mol% or less). The same will apply to other polyamide resins including polyamide 66.

The resin composition of this invention preferably contains 40% by mass or more of polyamide resin, the percentage is more preferably 43% by mass or more, and may be 50% by mass or more, and even may be 60% by mass or more. The upper limit is typically 90% by mass or below, and may be 85% by mass or below, 82% by mass or below, and even may be 78% by mass or below.

In this invention, only one type of polyamide resin may be used independently, two or more types may be used in a mixed manner. When two or more types are contained, the total content preferably falls within the aforementioned ranges.

### <Ratio of Blending of Polyphenylene Ether Resin and Polyamide Resin>

Ratio of blending of the polyphenylene ether resin and the polyamide resin in the resin composition of this invention is given by 90 to 40 parts by mass of polyamide resin, relative to 10 to 60 parts by mass of polyphenylene ether resin. The ratio of blending is preferably given by 85 to 45 parts by mass of polyamide resin relative to 15 to 55 parts by mass of polyphenylene ether resin; more preferably given by 80 to 50 parts by mass of the former relative to 20 to 50 parts by mass of the latter; even more preferably 80 to 60 parts by mass of the former relative to 20 to 40 parts by mass of the latter; and yet more preferably 80 to 70 parts by mass of the former relative to 20 to 30 parts by mass of the latter. The polyphenylene ether resin and the polyamide resin total 100 parts by mass.

As for the resin composition of this invention containing two or more types of polyphenylene ether resins and/or polyamide resins, total contents of the resins in the individual categories preferably satisfy the aforementioned ratios of blending.

### <Resin Ingredient and Other Resin>

The resin composition of this invention contains 85% by mass or more of the resin ingredient composed of the polyphenylene ether resin and the polyamide resin, the content is more preferably 90% by mass or more, and yet more preferably 95% by mass or more. The upper limit is preferably 99.6% by mass or below.

The resin composition of this invention may contain a resin other than the polyphenylene ether resin and the polyamide resin.

Such other resin is exemplified by thermoplastic resins including styrene-based resin, polyester resin, polyphenylene sulfide resin, liquid crystalline polyester resin, polycarbonate resin, polyacetal resin, polyacrylonitrile resin, acryl resin, and olefinic resins such as polyethylene resin and polypropylene resin; and thermosetting resins including epoxy resin, melamine resin, and silicone resin. Two or more types of these thermoplastic resins and the thermosetting resins may be used in a combined manner.

This invention may also employ a design substantially free of such resin other than the polyphenylene ether resin and the polyamide resin. The term "substantially free of" means that the content of such other resin is 1% by mass or less of the resin ingredients contained in the resin composition of this invention.

### <Compatibilizer>

The resin composition of this invention contains a compatibilizer for the polyphenylene ether resin and the polyamide resin. The compatibilizer is preferably exemplified by unsaturated acid, unsaturated acid anhydride, and derivatives of these compounds.

The compatibilizer is preferably exemplified by maleic acid, itaconic acid, chloromaleic acid, citraconic acid, butenylsuccinic acid, and tetrahydrophthalic acid; anhydrides of these compounds; maleimide, monomethyl maleate, and dimethyl maleate; and halide, amide, imide, and esters formed with alcohol having 1 to 20 carbon atoms or glycol, of these acids. Maleic acid and maleic anhydride are more preferable.

Content of the compatiliblizer, when contained in the resin composition of this invention, is 0.01 to 1.0 parts by mass per 100 parts by mass of the resin ingredient, more preferably 0.03 to 1.0 parts by mass, even more preferably 0.05 to 0.8 parts by mass, and yet more preferably 0.1 to 0.7 parts by mass.

Only one type of compatibilizer may be used independently, or two or more types may be used in a mixed manner. When two or more types are contained, the total content falls within the aforementioned ranges.

### <Phenolic Antioxidant>

The resin composition of this invention contains a phenolic antioxidant represented by formula (1) . The compound represented by formula (1) contains an amido group, and this presumably improves compatibility with the polyamide resin, dispersibility in the polyamide resin, and thereby efficiently demonstrates the effect of this invention.

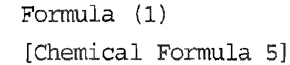

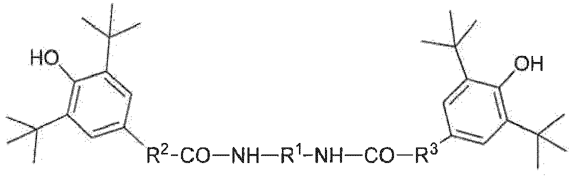

In formula (1), each of R¹, R² and R³ independently represents a divalent linking group.

R¹ preferably represents a divalent hydrocarbon group, more preferably represents an alkylene group or arylene group, and even more preferably represents an alkylene group. The alkylene group is a straight-chain or branched alkylene group, and is preferably a straight-chain alkylene group. The alkylene group is preferably an alkylene group represented by -(CH₂)ₙ-, where n is an integer of 1 to 10, and is more preferably an integer of 3 to 8.

Each of R² and R³ independently represents a divalent hydrocarbon group, more preferably represents an alkylene group or arylene group, and even more preferably represents an alkylene group. The alkylene group is a straight-chain or branched alkylene group, and is more preferably a straight-chain alkylene group. The alkylene group is preferably an alkylene group represented by - (CH₂)ₘ-, where m is an integer of 1 to 10, and more preferably represents an integer of 1 to 5. R² and R³ preferably represent the same group.

The phenolic antioxidant represented by formula (1) preferably has a molecular weight of 400 to 1200, which is more preferably 500 to 800.

Content of the phenolic antioxidant represented by formula (1) in the resin composition of this invention is 0.01 to 1.0 parts by mass, per 100 parts by mass of the resin ingredient. The lower limit value of the content is preferably 0.05 parts by mass or above, more preferably 0.1 parts by mass or above, and even more preferably 0.3 parts by mass or above. The upper limit value of the content is preferably 0.8 parts by mass or below, and more preferably 0.6 parts by mass or below.

Only one type of the phenolic antioxidant represented by formula (1) may be used independently, or two or more types may be used in a mixed manner. When two or more types are contained, the total content preferably falls within the aforementioned ranges.

### <Phosphorus-Containing Antioxidant>

The resin composition of this invention contains a phosphorus-containing antioxidant. The phosphorus-containing antioxidant is exemplified by phosphite esters and phosphate esters, wherein phosphite esters are preferred. Regarding specific examples of them, descriptions in paragraphs [0043] to [0056] of JP-A-2012-179911 may be referred to.

In this invention, a phosphorus-containing antioxidant represented by formula (3) is particularly preferred.

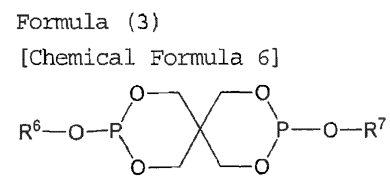

In formula (3), each of R⁶ and R⁷ independently represents a hydrocarbon group.

Each of R⁶ and R⁷ preferably represents an aryl group, and more preferably represents a phenyl group. The aryl group may have a substituent group. The substituent group is exemplified by hydrocarbon group, and is preferably alkyl group. The substituent group may further have a substituent group such as hydrocarbon group.

The compound represented by formula (3) preferably has a molecular weight of 400 to 1200, which is more preferably 500 to 800.

Content of the phosphorus-containing antioxidant in the resin composition of this invention is 0.01 to 1.0 parts by mass per 100 parts by mass of the resin ingredient. The lower limit value of the content is preferably 0.05 parts by mass or above, more preferably 0.08 parts by mass or above, and even more preferably 0.15 parts by mass or above. The upper limit value of the content is preferably 0.8 parts by mass or below, and more preferably 0.7 parts by mass or below.

Only one type of the phosphorus-containing antioxidant may be used independently, or two or more types may be used in a mixed manner. When two or more types are contained, the total content preferably falls within the aforementioned ranges.

### <Amine-Based Antioxidant>

The resin composition of this invention contains an amine-based antioxidant. The amine-based antioxidant is exemplified by amines such as N,N-diphenylethylenediamine, N,N-diphenylacetamidine, N,N-diphenylformamidine, N-phenylpiperidine, dibenzylethylenediamine, triethanolamine, phenothiazine, N,N'-di-sec-butyl-p-phenylenediamine, 4,4'-tetramethyl-diaminodiphenylmethane, P,P'-dioctyl-diphenylamine, N,N'-bis(1,4-dimethyl-pentyl)-*p*-phenylenediamine, phenyl-α-naphthylamine, phenyl-β-naphthylamine, and 4,4'-bis(4-α,α-dimethyl-benzyl)diphenylamine; derivatives of these amines; reaction products formed between amines and aldehydes; and reaction products formed between amines and ketones.

In this invention, particularly preferable are amine-based antioxidant represented by formula (2) below.

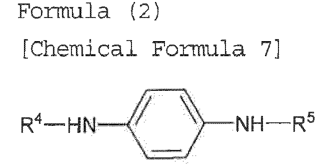

In formula (2), each of R⁴ and R⁵ independently represents a hydrocarbon group.

Each of R⁴ and R⁵ preferably represents an alkyl group or aryl group, and at least one of R⁴ and R⁵ preferably represents an aryl group. The alkyl group and the aryl group may have a substituent group. The aryl group is exemplified by phenyl group and naphthyl group.

The compound represented by formula (2) preferably has a molecular weight of 400 to 1200, which is more preferably 500 to 800.

The compound represented by formula (2) has two amines which serve as active sites, and this presumably contributes to efficiently demonstrate the effect of this invention.

Content of the amine-based antioxidant in the resin composition of this invention is 0.01 to 1.0 parts by mass, per 100 parts by mass of the resin ingredient. The lower limit value of the content is preferably 0.05 parts by mass or above, more preferably 0.08 parts by mass or above, and even more preferably 0.15 parts by mass or above. The upper limit value of the content is preferably 0.8 parts by mass or below, and more preferably 0.7 parts by mass or below.

Only one type of the amine-based antioxidant may be used independently, or two or more types may be used in a mixed manner. When two or more types are contained, the total content preferably falls within the aforementioned ranges.

### <Ratio of Blending of Antioxidant>

The resin composition of this invention has a mass ratio given by phenolic antioxidant represented by formula (1)/phosphorus-containing antioxidant/amine-based antioxidant of 1/0.1 to 2.0/0.1 to 2.0. Blending according to such ratio of blending can make the resin composition capable of providing a molded article that excels in heat resistance over a long period, and particularly in retentions of nominal tensile strain and Charpy impact strength. This also makes the resin composition less likely to cause change in color tone even if kept at high temperatures over a long period, while satisfying the aforementioned performances.

The mass ratio given by phenolic antioxidant represented by formula (1)/phosphorus-containing antioxidant/amine-based antioxidant is preferably 1/0.2 to 1.8/0.2 to 1.8, more preferably 1/0.3 to 1.7/0.3 to 1.7, and even more preferably 1/0.4 to 1.6/0.4 to 1.6.

In the resin composition of this invention, the total of the phenolic antioxidant represented by formula (1) and the phosphorus-containing antioxidant and the amine-based antioxidant preferably accounts for 0.3 to 2.0% by mass of the composition, which is more preferably 0.4 to 1.5% by mass.

### <Hydrotalcite>

The resin composition of this invention may contain hydrotalcite. With hydrotalcite contained therein, the resin composition will tend to have improved retention of Charpy impact strength, even if allowed to stand at high temperatures over a long period.

Types of hydrotalcite are not specifically limited. Hydrotalcite may be either natural one or synthetic one, and is exemplified by Mg₃ZnAl₂(OH)₁₂CO₃·wH₂O (w represents a positive integer), MgₓAl_{y}(OH)_{2x+3y-2}CO₃·wH₂O (where, x represents 1 to 10, y represents 1 to 10, and w represents a positive integer), and MgₓAl_{y}(OH)_{2x+3y-2}CO₃ (where, x represents 1 to 10, and y represents 1 to 10) .

Content of hydrotalcite in the resin composition of this invention is preferably 0.001 to 0.5 parts by mass, per 100 parts by mass of the resin ingredient. The lower limit value of the content is preferably 0.01 parts by mass or above, more preferably 0.05 parts by mass or above, and even more preferably 0.08 parts by mass or above. The upper limit value of the content is preferably 0.4 parts by mass or below.

Only one type of hydrotalcite may be used independently, or two or more types may be used in a mixed manner. When two or more types are contained, the total content preferably falls within the aforementioned ranges.

### <Other Additives>

The resin composition of this invention may contain ingredients other than those described above.

More specifically, the resin composition of this invention may contain dye, pigment, mold releasing agent, nucleating agent, impact modifier, plasticizer, fluidity improver or the like. Total content of these ingredients, when contained, preferably falls in the range from 0.01 to 5% by mass of the resin composition.

The resin composition of this invention may contain no, or only less than 0.0001% by mass relative to the composition, of a copper-containing compound. According to this invention, the resin composition, even if being substantially free of copper-containing compound, can keep high nominal tensile strain retention, and also high Charpy impact strength retention, after prolonged heating at high temperatures. Since the resin composition, blended with the copper-containing compound, is likely to discolor after prolonged use at high temperatures, so that this invention is advantageously employed for applications where discoloration is desired to be avoided.

### <Characteristics of Resin Composition>

The resin composition of this invention may particularly satisfy the characteristics below.

More specifically, the resin composition may be designed to show a nominal tensile strain retention of 30% or larger (more preferably 35% or larger, meanwhile typically 70% or smaller at maximum, and more preferably 55% or smaller), after being formed into a dumbbell-shaped multipurpose test specimen, type A, as specified in ISO 3167:93, and treated at 120°C for 3000 hours.

The resin composition may also be designed to show a Charpy impact strength retention according to ISO 179 of 50% or larger (more preferably 60% or larger, meanwhile typically 85% or smaller at maximum, and more preferably 75% or smaller), after being formed into a dumbbell-shaped multipurpose test specimen, type A, as specified in ISO 3167:93, and treated at 120°C for 3000 hours.

The resin composition of this invention may further be designed to show a color tone change (ΔE) of 10 or smaller (more preferably 9 or smaller, meanwhile typically 4 or larger at minimum, and more preferably 5 or larger), after being formed into a dumbbell-shaped multipurpose test specimen, type A, as specified in ISO 3167:93, and treated at 120°C for 3000 hours.

### <Applications of Resin Composition>

The resin composition of this invention has a wide variety of applications for which polyphenylene ether resin, particularly, blend of polyphenylene ether resin and polyamide resin is widely utilized.

The applications include automotive exterior/outer panel component, automotive interior component, and automotive underhood component. More specifically, the resin composition is suitable for exterior/outer panel components such as bumper, fender, door panel, molding, emblem, engine hood, wheel cover, roof, spoiler, and engine cover; underhood component; and interior components such as instrument panel and console box trim.

The resin composition is also applicable to cabinet and chassis of various computers and peripherals, other OA equipment, television set, video equipment, and various disk players; refrigerator, air conditioner, and liquid crystal projector.

The resin composition is furthermore applicable to electric wire/cable sheath obtained as a result of coverage over metal conductor or optical fiber; molded articles such as fuel case for direct methanol fuel cell, electrolyte bath for secondary battery, water pipe for fuel cell, cooling water tank, exterior case of boiler, ink-related peripheral/member and chassis for ink jet printer, water pipe, and joint; and separator for lithium battery obtained by stretching sheet/film.

One example of preferred applications of the resin composition of this invention relates to connector cover. In recent years, the connector cover is often colored for easy recognition of wiring and so forth in various equipment. This creates needs for high retentions of nominal tensile strain and Charpy impact strength, as well as small change of color tone, after prolonged use at high temperatures. From this point view, the resin composition of this invention is suitable for the connector cover.

Another example of preferred applications of the resin composition of this invention relates to junction box in engine room. The resin composition of this invention, featured by its high retentions of nominal tensile strain and Charpy impact strength after prolonged use at high temperatures, is suitable for such application.

### <Molded Article>

The molded article of this invention is formed from the resin composition of this invention. Applications of the molded article are exemplified by those described above, and connector cover is preferred one of them.

The molded article of this invention is obtainable by molding according to any of a variety of known methods including injection molding, extrusion molding (sheet, film), and hollow molding.

### EXAMPLES

This invention will further be detailed referring to Examples.

### <Starting Materials>

(A) Polyphenylene ether resin
   A-1: polyphenylene ether resin: PX100L, from Polyxylenol Singapore Pte. Ltd.
(B) Polyamide resin
   B-1: polyamide 66, 27AE1K, from Solvay Japan, Ltd.
(C) Compatibilizer
   C-1: maleic anhydride, from Nippon Shokubai Co., Ltd.
(D) Phenolic antioxidants
   D-1: Irganox 1098, from BASF 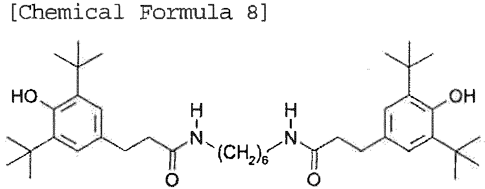
   D-2: Irganox 1010, from BASF 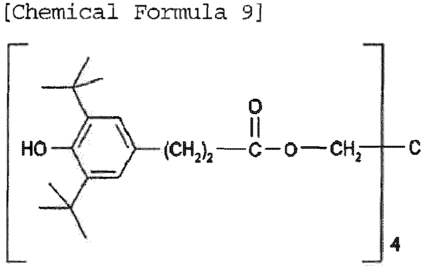
   D-3: AO80, from ADEKA Corporation 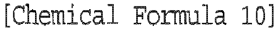 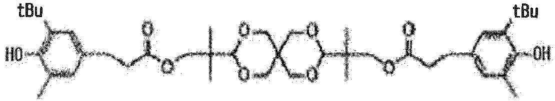
(E) Phosphorus-containing antioxidants
   E-1: PEP-36, from ADEKA Corporation 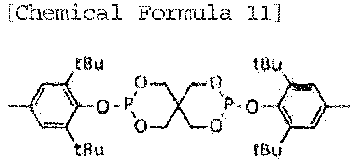
   E-2: Doverphos S-9228, from Dover Chemical Corporation 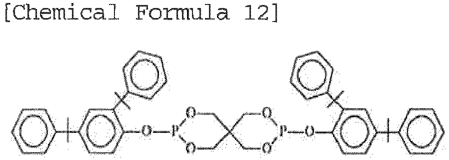
(F) Amine-based antioxidants
   F-1: Nocrac 6C, from Ouchi Shinko Chemical Industrial Co., Ltd. 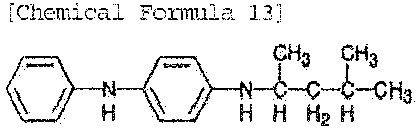
   F-2: Nocrac White, from Ouchi Shinko Chemical Industrial Co., Ltd. 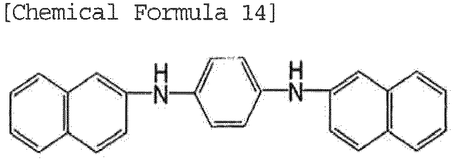
(G) Hydrotalcite
   G-1: DHT-4A-2, from Kyowa Chemical Industry Co., Ltd.
(H) Copper-containing stabilizer
   H-1: NHP, KI/CuCl/St-Ca, from Mitsubishi Engineering-Plastics Corporation

### Examples 1 to 7, Comparative Examples 1 to 5

The individual ingredients were mixed according to ratios (mass basis) listed in Tables 1 or 2 below, melt kneaded using a twin screw extruder (TEM18SS, from Toshiba Machine Co., Ltd.), at a cylinder temperature of 280°C and a screw rotation speed of 350 rpm, to thereby obtain resin compositions (pellets).

Each resin composition (pellet) thus obtained was evaluated as below. Results are summarized in Table 1.

### <Nominal Tensile Strain Retention>

Each resin composition (pellet) thus obtained was formed into a dumbbell-shaped multipurpose test specimen, type A, as specified in ISO 3167:93, using an injection molding machine (EC75SX, from Toshiba Machine Co., Ltd.), at a cylinder temperature of 280°C and a die temperature of 70°C. The obtained specimen was subjected to measurement of nominal tensile strain according to ISO 527, using a tensile tester (Strograph AP2, from Toyo Seiki Seisaku-sho, Ltd.), at a tensile velocity of 50 mm/s.

The tested specimen was placed in a hot air dryer preset to 120°C, and allowed to stand for 3000 hours. After the elapse of 3000 hours, the specimen was taken out from the dryer, and the nominal tensile strain was measured in the same way as described above, and the nominal tensile strain retention was calculated from the values of nominal tensile strain obtained before and after the annealing.

The nominal tensile strain retention was represented by (post-annealing nominal tensile strain/pre-annealing nominal tensile strain×100 (in %).

### <Charpy Impact Strength Retention>

Each resin composition (pellet) thus obtained was formed into a dumbbell-shaped multipurpose test specimen, type A, as specified in ISO 3167:93, using an injection molding machine (EC75SX, from Toshiba Machine Co., Ltd.), at a cylinder temperature of 280°C and a die temperature of 70°C. The obtained specimen was cut off at both ends and notched at the center, using a notching tool (A-4, from Toyo Seiki Seisaku-sho, Ltd.). The specimen was then subjected to measurement of Charpy impact strength according to ISO 179, using a Charpy impact tester (DG-CB, from Toyo Seiki Seisaku-sho, Ltd.) and a 2-J hammer.

The tested specimen was placed in a hot air dryer preset to 120°C, and allowed to stand for 3000 hours. After the elapse of 3000 hours, the specimen was taken out from the dryer, and the Charpy impact strength was measured in the same way as described above, and the Charpy impact strength retention was calculated from the values of Charpy impact strength obtained before and after the annealing.

The Charpy impact strength retention was represented by (post-annealing Charpy impact strength/pre-annealing Charpy impact strength)×100 (in %).

### <Color Tone (ΔE)>

Each resin composition (pellet) thus obtained was formed into a dumbbell-shaped multipurpose test specimen, type A, as specified in ISO 3167:93, using an injection molding machine (EC75SX, from Toshiba Machine Co., Ltd.), at a cylinder temperature of 280°C and a die temperature of 70°C. The obtained specimen was subjected to measurement of color tone Lab, using a spectral color difference meter (SE6000, from Nippon Denshoku Industries Co., Ltd.).

The tested specimen was placed in a hot air dryer preset to 120°C, and allowed to stand for 3000 hours. After the elapse of 3000 hours, the specimen was taken out from the dryer, the color tone Lab was measured in the same way as described above, and the color tone change ΔE was calculated from the values obtained before and after the annealing.

Letting now (post-annealing L, a, b)-(pre-annealing L, a, b) be ΔL, Δa, and Δb, the calculation is given by ΔE = (ΔL² + Δa² + Δb²)^{1/2}.

**[Table 1]**

| | | Example 1 | Example 2 | Example 3 | Example 4 | Example 5 | Example 6 |
|---|---|---|---|---|---|---|---|
| (A)Polyphenylene ether resin | A-1 | 25 | 25 | 25 | 25 | 25 | 25 |
| (B) Polyamide 66 | B-1 | 75 | 75 | 75 | 75 | 75 | 75 |
| (C) Compatibilizer | C-1 | 0.3 | 0.3 | 0.3 | 0.3 | 0.3 | 0.3 |
| (D) Phenolic antioxidant | D-1 | 0.4 | 0.4 | 0.4 | 0.4 | 0.4 | 0.4 |
| | D-2 | | | | | | |
| | D-3 | | | | | | |
| (E) Phosphorus-containing antioxidants | E-1 | 0.2 | 0.6 | | 0.2 | 0.2 | 0.2 |
| | E-2 | | | 0.2 | | | |
| (F) Amine-based antioxidant | F-1 | 0.2 | 0.2 | 0.2 | 0.6 | | 0.2 |
| | F-2 | | | | | 0.2 | |
| (G) Hydrotalcite | G-1 | 0.1 | 0.1 | 0.1 | 0.1 | 0.1 | 0.3 |
| (H) Copper-containing stabilizer | H-1 | | | | | | |
| (D)/(E)/(F) | | 1/0.5/0.5 | 1/1.5/0.5 | 1/0.5/0.5 | 1/0.5/1.5 | 1/0.5/0.5 | 110.510.5 |
| Nominal tensile strain retention after treated at 120°C for 2000 hours | % | 72 | 69 | 83 | 77 | 72 | 78 |
| Nominal tensile strain retention after treated at 120°C for 3000 hours | % | 49 | 48 | 39 | 48 | 39 | 45 |
| Charpy impact strength retention after treated at 120°C for 2000 hours | % | 88 | 87 | 83 | 85 | 77 | 83 |
| Charpy impact strength retention after treated at 120°C for 3000 hours | % | 65 | 67 | 65 | 70 | 65 | 70 |
| Color tone (ΔE) after treated at 120°C for 2000h | MPa | 6.1 | 6.0 | 6.0 | 7.2 | 6.1 | 5.2 |
| Color tone (ΔE) after treated at 120°C for 3000h | MPa | 7.7 | 7.9 | 7.9 | 8.8 | 7.4 | 6.3 |

**[Table 2]**

| | | Example 7 | Comparative Example 1 | Comparative Example 2 | Comparative Example 3 | Comparative Example 4 | Comparative Example 5 |
|---|---|---|---|---|---|---|---|
| (A)Polyphenylene ether resin | A-1 | 25 | 25 | 25 | 25 | 25 | 25 |
| (B) Polyamide 66 | B-1 | 75 | 75 | 75 | 75 | 75 | 75 |
| (C) Compatibilizer | C-1 | 0.3 | 0.3 | 0.3 | 0.3 | 0.3 | 0.3 |
| (D) Phenolic antioxidant | D-1 | 0.4 | 0.2 | | | 0.4 | 0.4 |
| | D-2 | | | 0.4 | | | |
| | D-3 | | | | 0.4 | | |
| (E) Phosphorus-containing antioxidants | E-1 | 0.2 | | 0.2 | 0.2 | | 0.2 |
| | E-2 | | | | | | |
| (F) Amine-based antioxidant | F-1 | 0.2 | | 0.2 | 0.2 | 0.2 | |
| | F-2 | | | | | | |
| (G) Hydrotalcite | G-1 | | | 0.1 | 0.1 | 0.1 | 0.1 |
| (H) Copper-containing stabilizer | H-1 | | 0.2 | | | | |
| (D)/(E)/(F) | | 1/0.5/0.5 | 1/0/0 | 1/0.5/0.5 | 1/0.5/0.5 | 1/0/0.5 | 1/0.5/0 |
| Nominal tensile strain retention after treated at 120°C for 2000 hours | % | 72 | 78 | 16 | 17 | 8 | 8 |
| Nominal tensile strain retention after treated at 120°C for 3000 hours | % | 40 | 44 | 10 | 9 | 7 | 6 |
| Charpy impact strength retention after treated at 120°C for 2000 hours | % | 68 | 86 | 57 | 64 | 18 | 14 |
| Charpy impact strength retention after treated at 120°C for 3000 hours | % | 55 | 67 | 15 | 23 | 7 | 6 |
| Color tone (ΔE) after treated at 120°C for 2000h | MPa | 6.8 | 9.2 | 6.3 | 6.1 | 7.3 | 4.8 |
| Color tone (ΔE) after treated at 120°C for 3000h | MPa | 8.4 | 12.8 | 7.7 | 7.1 | 8.8 | 6.3 |

As is clear from the results summarized above, the resin compositions of this invention were found to show high nominal tensile strain retention, and also high Charpy impact strength retention, even after prolonged heating at higher temperatures (Examples 1 to 7). The resin compositions are valuable particularly from the viewpoint that these performances can be achieved without being mixed with the copper-containing compound. Since these performances can be achieved without being mixed with the copper-containing compound, so that the resin compositions can suppress color tone change even after prolonged heating at high temperatures, and are suitably applicable to resin compositions to be colored.

In contrast, the resin composition having been mixed with the copper-containing stabilizer, in place of the phosphorus-containing antioxidant and the amine-based antioxidant, was found to show high nominal tensile strain retention, and also high Charpy impact strength retention even after prolonged heating at higher temperatures, but found to show remarkable change of color tone (Comparative Example 1).

When the phenolic antioxidants, but having structures other than the structure specified in this invention, were used for example in Comparative Example 2 and Comparative Example 3, the resin compositions were found to show low nominal tensile strain retention, and also show low Charpy impact strength retention, after prolonged heating at high temperatures. That is, type of the phenolic antioxidant was found to largely affect the effect of this invention.

In addition, in a case with the phenolic antioxidant and the amine-based antioxidant specified in this invention mixed therein, but without the phosphorus-containing antioxidant mixed therein (Comparative Example 4), or, in a case with the phenolic antioxidant and the phosphorus-containing antioxidant specified in this invention mixed therein, but without the amine-based antioxidant mixed therein (Comparative Example 5), the resin compositions were found to show low nominal tensile strain retention, and also show low Charpy impact strength retention, after prolonged heating at high temperatures.

In addition, addition of hydrotalcite was found to yield a molded article that further excels in Charpy impact strength retention (from comparISO n of Example 7 with other Examples).

## Claims

1. A resin composition comprising, per 100 parts by mass of a resin ingredient composed of 10 to 60 parts by mass of a polyphenylene ether resin and 90 to 40 parts by mass of a polyamide resin:
0.01 to 1.0 parts by mass of a compatibilizer;
0.01 to 1.0 parts by mass of a phenolic antioxidant represented by formula (1);
0.01 to 1.0 parts by mass of a phosphorus-containing antioxidant; and
0.01 to 1.0 parts by mass of an amine-based antioxidant,
having a mass ratio given by phenolic antioxidant represented by formula (1)/ phosphorus-containing antioxidant/amine-based antioxidant of 1/0.1 to 2.0/0.1 to 2.0, 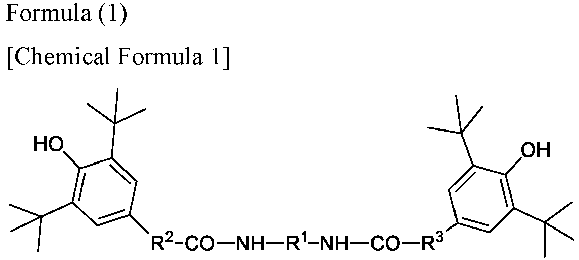
in formula (1), each of R¹, R² and R³ independently represents a divalent linking group,
wherein the resin composition contains 85 % by mass or more of the resin ingredient composed of the polyphenylene ether resin and the polyamide resin..

2. The resin composition of Claim 1, further comprising 0.001 to 0.5 parts by mass of hydrotalcite, per 100 parts by mass of the resin ingredient.

3. The resin composition of Claim 1 or 2, wherein the amine-based antioxidant is represented by formula (2): 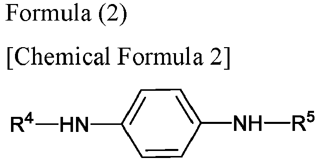 in formula (2), each of R⁴ and R⁵ independently represents a hydrocarbon group.

4. The resin composition of any one of Claims 1 to 3, wherein the resin composition contains no, or less than 0.0001% by mass relative to the composition, of a copper-containing compound.

5. A molded article formed from the resin composition described in any one of Claims 1 to 4.

6. The molded article of Claim 5, being a connector cover.

## Patentansprüche

1. Harzzusammensetzung, enthaltend pro 100 Masseteile eines Harzbestandteils, der aus 10 bis 60 Masseteilen eines Polyphenylenetherharzes und 90 bis 40 Masseteilen eines Polyamidharzes zusammengesetzt ist:
0,01 bis 1,0 Masseteil eines Kompatibilisators;
0,01 bis 1,0 Masseteil eines phenolischen Antioxidans, dargestellt durch Formel (1);
0,01 bis 1,0 Masseteil eines Phosphor enthaltenden Antioxidans, und
0,01 bis 1,0 Masseteil eines Antioxidans auf Aminbasis
mit einem Masseverhältnis gegeben durch phenolisches Antioxidans dargestellt durch Formel (1)/Phosphor enthaltendes Antioxidans/Antioxidans auf Aminbasis von 1/0,1 bis 2,0/0,1 bis 2,0, 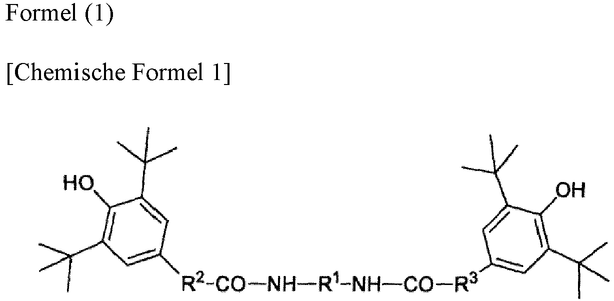
wobei in Formel (1) jedes von R¹, R² und R³ unabhängig voneinander eine bivalente Bindungsgruppe darstellt,
wobei die Harzzusammensetzung 85 Masse-% oder mehr des Harzbestandteils, zusammengesetzt aus dem Polyphenylenetherharz und dem Polyamidharz, enthält.

2. Harzzusammensetzung nach Anspruch 1, weiterhin umfassend 0,001 bis 0,5 Masseteile von Hydrotalcit pro 100 Masseteile des Harzbestandteils.

3. Harzzusammensetzung nach Anspruch 1 oder 2, wobei das Antioxidans auf Aminbasis in Formel (2) dargestellt ist: 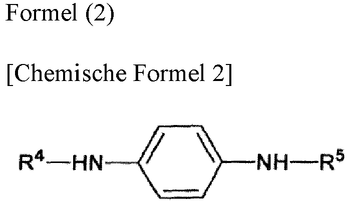 wobei in Formel (2) jedes von R⁴ und R⁵ unabhängig voneinander eine Kohlenwasserstoffgruppe darstellt.

4. Harzzusammensetzung nach einem der Ansprüche 1 bis 3, wobei die Harzzusammensetzung keine Kupfer enthaltende Verbindung, oder weniger als 0,0001 Masse-%, bezogen auf die Zusammensetzung, einer Kupfer enthaltenden Verbindung, enthält.

5. Formartikel, geformt aus der Harzzusammensetzung, beschrieben in einem der Ansprüche 1 bis 4.

6. Formartikel nach Anspruch 5, der eine Verbindungsgliedabdeckung ist.

## Revendications

1. Composition de résine comprenant, pour 100 parties en masse d'un ingrédient de résine composé de 10 à 60 parties en masse d'une résine d'éther de polyphénylène et de 90 à 40 parties en masse d'une résine de polyamide :
0,01 à 1,0 partie en masse d'un compatibilisant ;
0,01 à 1,0 partie en masse d'un antioxydant phénolique représenté par la formule (1) ;
0,01 à 1,0 partie en masse d'un antioxydant contenant du phosphore ; et
0,01 à 1,0 partie en masse d'un antioxydant à base d'amine,
ayant un rapport de masse donné par antioxydant phénolique représenté par la formule (1)/antioxydant contenant du phosphore/antioxydant à base d'amine de 1/0,1 à 2,0/01 à 2,0, 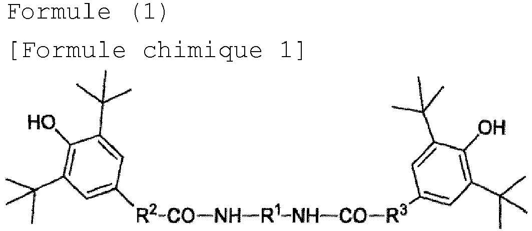
dans la formule (1), chacun de R¹, R² et R³ représente indépendamment un groupe de liaison divalent,
sachant que la composition de résine contient 85 % en masse ou plus de l'ingrédient de résine composé de la résine d'éther de polyphénylène et de la résine de polyamide.

2. La composition de résine de la revendication 1, comprenant en outre 0,001 à 0,5 partie en masse d'hydrotalcite, pour 100 parties en masse de l'ingrédient de résine.

3. La composition de résine de la revendication 1 ou 2, sachant que l'antioxydant à base d'amine est représenté par la formule (2) : 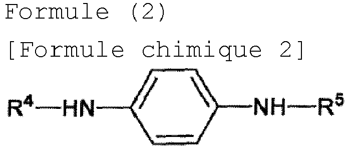 dans la formule (2), chacun de R⁴ et R⁵ représente indépendamment un groupe d'hydrocarbone.

4. La composition de résine de l'une quelconque des revendications 1 à 3, sachant que la composition de résine ne contient pas, ou moins de 0,0001 % en masse par rapport à la composition, d'un composé contenant du cuivre.

5. Article moulé formé à partir de la composition de résine décrite dans l'une quelconque des revendications 1 à 4.

6. L'article moulé de la revendication 5, qui est un capot de connecteur.
